# EUROPEAN PATENT SPECIFICATION

(11) **EP 3 814 047 B1**
(45) Date of publication and mention of the grant of the patent: **04.09.2024**
(21) Application number: 19814744.9
(22) Date of filing: 05.06.2019
(51) Int. Cl.: B23P 19/00, H01R 43/00, H01R 43/04, H01R 43/042, H01R 4/50, B25B 27/02

(54) **ELECTRICAL CONNECTOR INSTALLATION TOOL**
INSTALLATIONSWERKZEUG FÜR ELEKTRISCHE VERBINDER
OUTIL D'INSTALLATION DE CONNECTEUR ÉLECTRIQUE

(30) Priority: 05.06.2018 US 201862680872 P
(43) Date of publication of application: 05.05.2021
(73) Proprietor: Hubbell Incorporated, Shelton, CT 06484 (US)
(72) Inventor: POIRIER, Robert Michael, Bedford, NH 03110 (US)
(74) Representative: Wilson Gunn
(86) International application number: PCT/US2019/035598
(87) International publication number: WO 2019/236715

(56) References cited:
- US-A1- 2005 039 327
- US-A1- 2007 214 860
- US-A1- 2015 283 693
- US-B1- 6 230 542
- US-B2- 7 614 139
- US-B2- 9 160 128

## Description

### REFERENCE TO RELATED APPLICATION

This application claims the benefit of prior-filed, co-pending U.S. Provisional Patent Application No. 62/680,872, filed June 5, 2018.

### TECHNICAL FIELD

The present disclosure relates to a connector installation tool, and more specifically, to a pole-mounted, electrical connector installation tool.

### BACKGROUND

Electrical connector installation tools may be operated to install a connector, such as a wedge connector, onto multiple conductors. Conventional installation tools contain a ram that is driven by ignition of a charge cartridge. The charge cartridge may contain a powder that is ignited when a case is struck (e.g., by a hammer).

### SUMMARY

In one embodiment, a connector installation tool includes an elongated body, a handle, a battery, and a c-shaped tool head. The elongated body includes a first end, a second end, and an axis extending therebetween. The handle includes a switch and is positioned proximate the first end. The switch is moveable between a first position and a second position. The battery is supported on the body and is configured to provide power to an actuator when the switch is in the first position. The c-shaped tool head is positioned proximate the second end. The c-shaped tool head includes a stop surface and a ram, and the ram is extendable toward the stop surface. The connector installation tool further includes a conduit to provide pressurized fluid to drive the c-shaped tool head, the pressurized fluid configured to flow towards the c-shaped tool head when the switch is in the first position.

US 2015/0283693 discloses a connector tool head having the precharacterizing features of claim 1.

US 2005/0039327 discloses a tool for securing a tap connector to electrical cables.

In accordance with the present invention there is provided a connector installation tool having the characterizing features of claim 1. Optional preferred features are defined in the dependent claims.

Other aspects of the disclosure will become apparent by consideration of the detailed description and accompanying drawings.

### BRIEF DESCRIPTION OF THE DRAWINGS

FIG. 1 is a perspective view of a connector installation tool.
FIG. 2 is a top plan view of the connector installation tool of FIG. 1.
FIG. 3 is a side elevation view of the connector installation tool of FIG. 1.
FIG. 4 is a bottom plan view of the connector installation tool of FIG. 1.

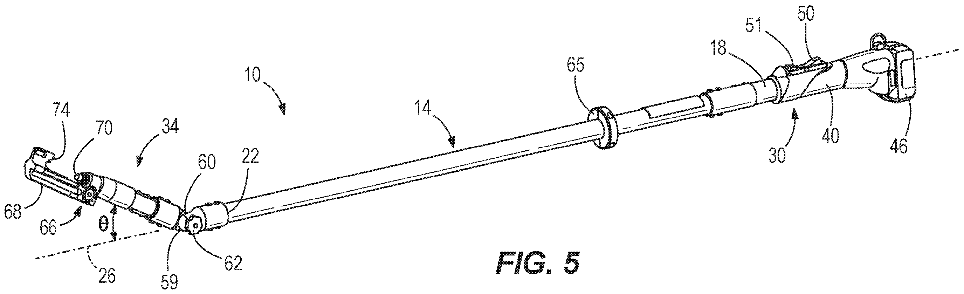

FIG. 5 is a perspective view of the connector installation tool of FIG. 1, illustrating a tool head pivoted with respect to a tool body.
FIG. 6 is an enlarged perspective view of a portion of the connector installation tool of FIG. 5.
FIG. 7 is a perspective view of a connecting member and a block coupling two conductors.
FIG. 8 is a perspective view of the tool head engaging the connecting member of FIG. 7, a piston of the tool head in a first position.
FIG. 9 is a perspective view of the tool head engaging the connecting member of FIG. 7, the piston of the tool head in a second position.

### DETAILED DESCRIPTION

Before any embodiments are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting. Use of "including" and "comprising" and variations thereof as used herein is meant to encompass the items listed thereafter and equivalents thereof as well as additional items. Use of "consisting of" and variations thereof as used herein is meant to encompass only the items listed thereafter and equivalents thereof. Unless specified or limited otherwise, the terms "mounted," "connected," "supported," and "coupled" and variations thereof are used broadly and encompass both direct and indirect mountings, connections, supports, and couplings.

In general, the present disclosure relates to an installation tool for installing a connector between two electrical conductors. In some embodiments, the connector installation tool applies a force to insert a wedge connector between two electrical conductors and form an electrical connection therebetween. The tool includes an elongated body to permit the working end to install the connector in locations that are difficult to access.

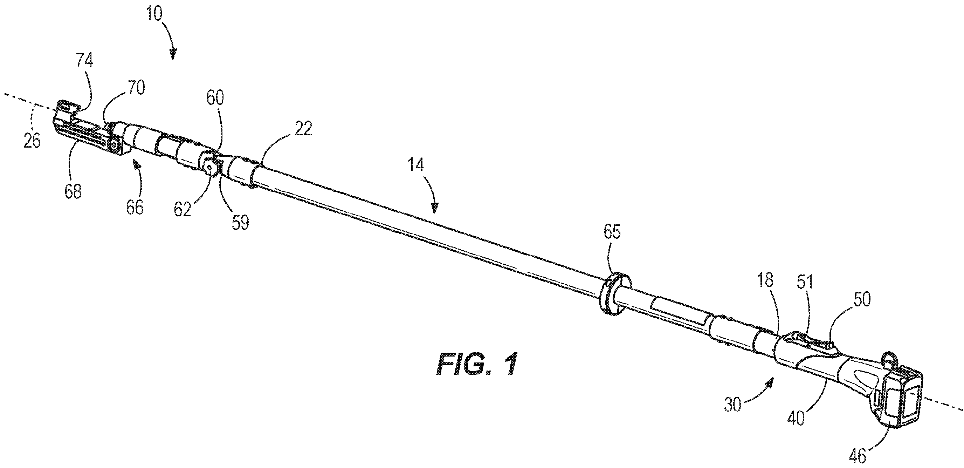

As shown in FIGS. 1-4, the installation tool 10 includes a body 14 having a first end 18, a second end 22, and an axis 26 extending between the first end 18 and the second end 22. In the illustrated embodiment, a handle 30 is positioned proximate the first end 18 and a tool accessory or head 34 is coupled to the second end 22. In some embodiments, the body 14 is generally cylindrical in shape, and may be at least 1.83 meters (six feet) long.

The handle 30 includes a terminal (not shown) that may receive a battery 46. A grip 40 is positioned at least partially around the outer periphery of the handle 30. The grip 40 may have a higher coefficient of friction than the rest of the handle 30. A user's hand is configured to be placed on the grip 40 and the higher coefficient of friction helps to limit the handle 30 from slipping in the user's hand. A switch 50 is positioned proximate the grip 40 on the outer periphery of the handle 30. In the illustrated embodiment, the switch 50 is a trigger. The trigger 50 is configured to allow current to pass while the trigger 50 is engaged, and the trigger 50 is configured to block current while the trigger 50 is released. In other embodiments, the switch may be a lever moveable between a first or closed position configured to allow current to pass and a second or open position configured to block current from passing. In the illustrated embodiment, the installation tool 10 further includes a lock or safety 51 that must be actuated from an open position to a closed position to permit the trigger 50 to be actuated.

The head 34 is coupled to the second end 22 of the body 14. In the illustrated embodiment, the second end 22 of the body 14 includes a projection 59 and the head 34 includes a projection 60 that is pivotably coupled to the projection 59, e.g., by a threaded fastener 62 extending through the projections 59, 60. The threaded fastener 62 may rotate in a first or loosening direction in order to allow the head 34 to pivot with respect to the body 14. The head 34 may pivot through an angle θ relative to the axis 26 of the body 14. In the illustrated embodiment, the head 34 may pivot from a first position in which the head 34 is aligned with the axis 26 to a second position in which the head 34 is inclined with respect to the axis 26 of the body 14. In some embodiments, the head 34 may pivot through a range of 180 degrees. For example, the head 34 may pivot through an angle θ between +90 degrees and -90 degrees with respect to the axis 26, allowing the head 34 to be positioned orthogonally with respect to the body 14. In other embodiments, the head 34 may pivot more or less than 180 degrees. After positioning the head 34 in a desired orientation, the threaded fastener 62 is rotated in a second or tightening direction to secure the head 34 with respect to the body 14.

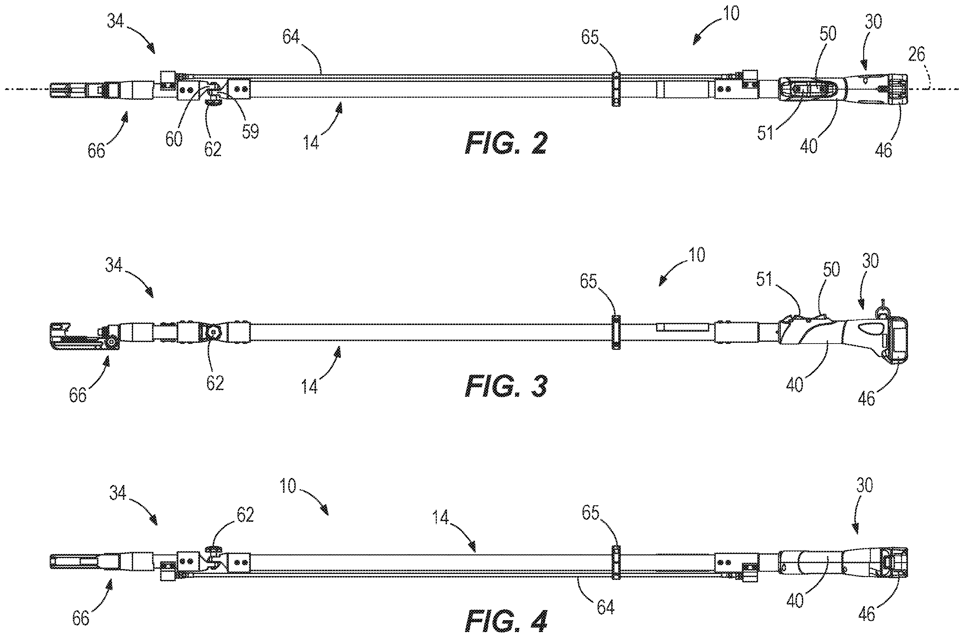

The installation tool 10 further includes a motor and a pump (both not shown). In some embodiments, the motor and pump are positioned within the body 14. The motor is selectively operated by current from the battery 46 based on actuation of the trigger 50. While the trigger 50 is engaged, current flows to the motor, thereby powering the motor. The motor, in turn, operates a fluid pump. The pump may be fluidly coupled to a reservoir (not shown) and a conduit or hose 64 (FIG. 2). In the illustrated embodiment, the hose 64 is positioned outside of the body 14. The pump drives fluid (e.g., hydraulic fluid) from the reservoir through the hose 64 to the head 34. A ring 65 is disposed around the body 14 and is coupled to the hose 64 to prevent the hose from twisting around the body 14.

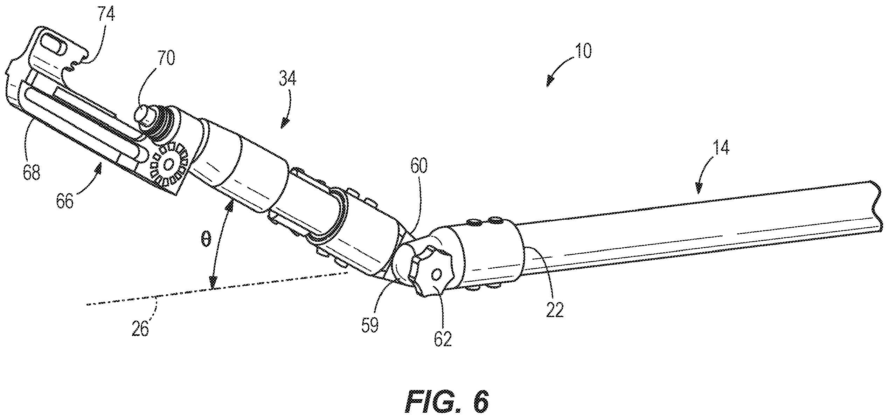

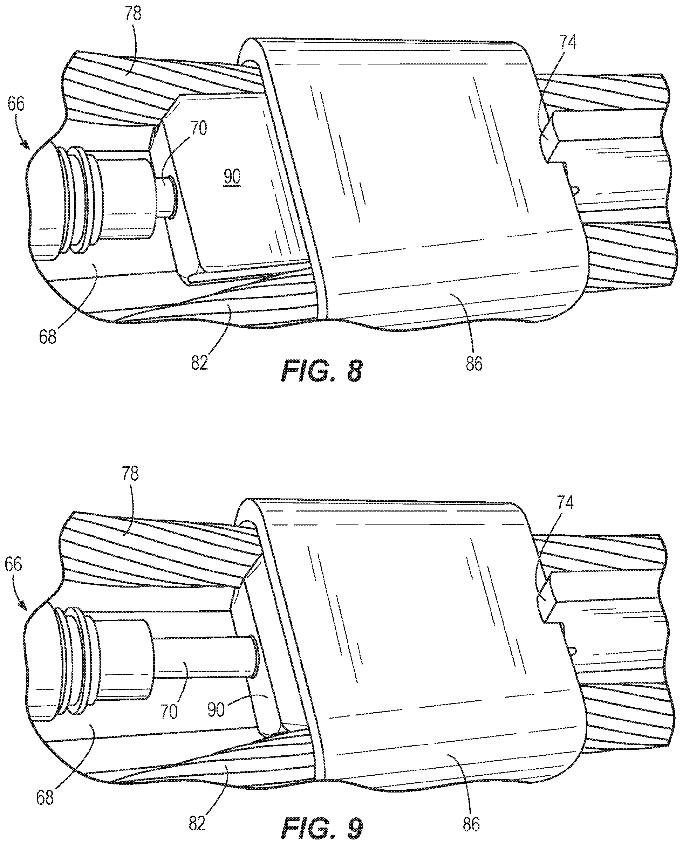

As shown in FIG. 6, the head 34 includes a clamping tool 66. In the illustrated embodiment, the clamping tool 66 includes a frame 68, a piston or ram 70, and a stop surface 74 positioned opposite the ram 70. In the illustrated embodiment, the frame 68 is C-shaped. In the illustrated embodiment, the stop surface 74 is positioned adjacent a distal end of the head 34, while the ram 70 is positioned proximate the end of the head 34 that is coupled to the second end 22 of the body 14. The ram 70 is moveable with respect to the frame 68. In the illustrated embodiment, the ram 70 has a first or retracted position (FIG. 8) and a second or extended position (FIG. 9). In the retracted position, the ram 70 is positioned substantially within the frame 68. In the extended position, the ram 70 is protrudes from the frame 68 toward the stop surface 74. In some embodiments, the ram 70 is biased toward the retracted position such that the ram 70 moves toward the retracted position when a fluid pressure is reduced.

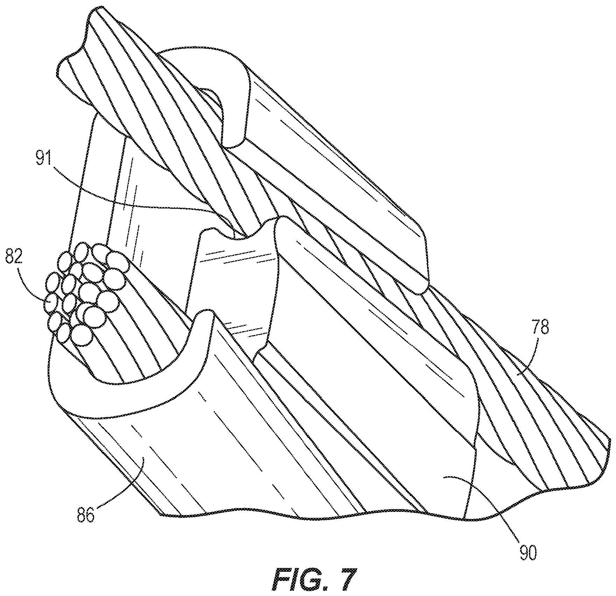

The clamping tool 66 can be operated to couple a first electrical conductor 78 to a second electrical conductor 82. As shown in FIG. 7, the first conductor 78 and the second conductor 82 are positioned within a connecting member 86. The connecting member 86 may have a cross-section that is C-shaped, and one side of the connecting member 86 engages the first conductor 78 while the other side of the connecting member 86 engages the second conductor 82. The connecting member 86 is also tapered such that one end of the connecting member 86 is wider than the other end. A wedge or block 90 is positioned partially within a wider end of the connecting member 86 between the first conductor 78 and the second conductor 82. The block 90 may have a chamfer or groove 91 (FIG. 7) positioned adjacent one or both conductors 78, 82. The block 90 is insertable into the connecting member 86 toward the narrower end of the connecting member 86, thereby creating a wedge between the conductors 78, 82.

As shown in FIG. 8, to position the block 90 within the clamp member 86, the clamp member 66 is positioned adjacent the connecting member 86 so that an open section of the clamping tool 66 is adjacent an open section of the connecting member 86. In other words, an opening to the C-shaped clamping tool 66 receives an opening of the C-shaped connecting member 86 so that the C-shaped clamp member 66 is offset by 90 degrees from the C-shaped connecting member 86. The block 90 extends from the wider end of the connecting member 86 and is positioned within the opening of the clamp 66. In the illustrated embodiment, the ram 70 is positioned adjacent the block 90 and the stop surface 74 is adjacent a surface on an opposite end (i.e., the narrower end) of the connecting member 86 from the block 90.

As shown in FIG. 9, when a user actuates the trigger 50, the motor receives power, thereby powering the pump. Hydraulic fluid travels from the pump, through the hose 64, and to the head 34 and the clamping tool 66. The hydraulic fluid forces the ram 70 into the extended position. As the ram 70 extends, the ram 70 contacts the block 90. With the stop surface 74 engaging the opposite end of the connecting member 86, the ram 70 applies a force on the block 90 and translates the block 90 into the connecting member 86 and between the conductors 78, 82. In the illustrated embodiment, the clamping tool 66 may provide a slow insertion of the block 90. In other words, the ram 70 applies a force to the block 90 over a period of time (e.g., 1 millisecond, 1 second, 10 seconds, etc.) so that the block 90 a total insertion distance instantaneously (i.e., in a very short amount of time). This may help to ensure that the block 90 is properly installed.

The block 90 may continue to translate until it abuts the stop surface 74, although the block 90 is not required to abut the stop surface 74. Once the block 90 reaches a desired position (i.e., a coupling position in which the first conductor 78 to the second conductor 82 are secured within the connecting member 86), the trigger 50 may be released, thereby stopping the flow of hydraulic fluid from the pump. After the trigger 50 is released, a spring (not shown) urges the ram 70 toward the retracted position (FIG. 8). The retracting ram 70 forces the hydraulic fluid back through the hose 64 toward the reservoir. The block 90 is fit into the connecting member 86 and does not move when the ram 70 retracts.

## Claims

1. A connector installation tool (10) comprising:
an elongated body (14) including a first end (18), a second end (22), and an axis (26) extending therebetween;
a handle (30) having a switch (50) and positioned proximate the first end (18), the switch (50) moveable between a first position and a second position;
a battery (46) supported on the body (14) configured to provide power to an actuator when the switch (50) is in the first position; **characterized by** further comprising a c-shaped tool head (34) and a conduit (64) to provide pressurized fluid to drive the c-shaped tool head (34), the c-shaped tool head (34) being positioned proximate the second end (22), the c-shaped tool head (34) including a stop surface (74) and a ram (70), the ram (70) being extendable toward the stop surface; wherein the pressurized fluid configured to flow towards the c-shaped tool head (34) when the switch (50) is in the first position.

2. The connector installation tool of claims 1, wherein the c-shaped tool head is pivotable away from the axis about the second end (22).

3. The connector installation tool of claim 2, wherein the c-shaped tool head (34) is pivotable through a range of at least 180 degrees about the second end (22).

4. The connector installation tool of any one of claims 1 to 3, wherein the conduit (64) extends along an outer surface of the elongated body (14) at least partially between the first end (18) of the tool body (14) and the c-shaped tool head (34).

5. The connector installation tool of any one of claims 1 to 4, wherein the c-shaped tool head (34) is configured to be placed around a block (90) such that the block is positioned between the ram (70) and the stop surface (74), the ram (70) is configured to contact and drive the block (90).

6. The connector installation tool of any one of claims 1 to 5, wherein the c-shaped tool head (34) is positioned at least 1.83 meters away from the first end (18) while the c-shaped tool head (34) is coupled to the second end (22).

7. The connector installation tool of any one of claims 1 to 6, wherein a first projection (59) extends from the second end (22) of the elongated body (14) and a second projection (60) extends from the c-shaped tool head (34), further comprising a fastening member (62) releasably securing the first projection (59) relative to the second projection (60), loosening of the fastening member (62) permitting movement of the c-shaped tool head (34) relative to the elongated body (14).

8. The connector installation tool of claim 1, wherein the c-shaped tool head (34) is supported for pivoting movement about the second end (22) of the body (14).

9. The connector installation tool of claim 8, wherein the c-shaped tool head (34) is pivotable through at least 180 degrees.

10. The connector installation tool of claim 1, wherein the second end (22) of the body (14) includes a first projection (59) and the c-shaped tool head (34) includes a second projection (60) adjacent the first projection (59), the connector installation tool(10)further comprising a fastener coupling (62) the first projection (59) and the second projection (60), the fastener (62) being adjustable between a loose position in which the c-shaped tool head (34) is permitted to pivot relative to the second end (22) of the body and a tightened position in which the c-shaped tool head (34) is secured against movement relative to the second end (22) of the body (14).

## Patentansprüche

1. Verbinderinstallationswerkzeug (10), umfassend:
einen länglichen Körper (14), der ein erstes Ende (18), ein zweites Ende (22) und eine Achse (26) umfasst, die sich dazwischen erstreckt,
einen Griff (30), der einen Schalter (50) hat und nahe dem ersten Ende (18) positioniert ist, wobei der Schalter (50) zwischen einer ersten Position und einer zweiten Position bewegbar ist;
eine an dem Körper (14) getragene Batterie (46), die dazu konfiguriert ist, Energie für einen Aktuator bereitzustellen, wenn der Schalter (50) in der ersten Position ist; **dadurch gekennzeichnet, dass** es ferner einen c-förmigen Werkzeugkopf (34) und eine Leitung (64) umfasst, um unter Druck stehendes Fluid zum Antreiben des c-förmigen Werkzeugkopfs (34) bereitzustellen, wobei der c-förmige Werkzeugkopf (34) nahe dem zweiten Ende (22) positioniert ist, wobei der c-förmige Werkzeugkopf (34) eine Stoppoberfläche (74) und eine Ausdrückstange (70) umfasst, wobei die Ausdrückstange (70) in Richtung der Stoppoberfläche ausfahrbar ist; wobei das unter Druck stehende Fluid dazu konfiguriert ist, in Richtung des c-förmigen Werkzeugkopfs (34) zu fließen, wenn der Schalter (50) in der ersten Position ist.

2. Verbinderinstallationswerkzeug nach Anspruch 1, wobei der c-förmige Werkzeugkopf weg von der Achse um das zweite Ende (22) schwenkbar ist.

3. Verbinderinstallationswerkzeug nach Anspruch 2, wobei der c-förmige Werkzeugkopf (34) durch einen Bereich von wenigstens 180 Grad um das zweite Ende (22) schwenkbar ist.

4. Verbinderinstallationswerkzeug nach einem der Ansprüche 1 bis 3, wobei sich die Leitung (64) entlang einer äußeren Oberfläche des länglichen Körpers (14) wenigstens teilweise zwischen dem ersten Ende (18) des Werkzeugkörpers (14) und dem c-förmigen Werkzeugkopf (34) erstreckt.

5. Verbinderinstallationswerkzeug nach einem der Ansprüche 1 bis 4, wobei der c-förmige Werkzeugkopf (34) dazu konfiguriert ist, um einen Block (90) herum derart platziert zu sein, dass der Block zwischen der Ausdrückstange (70) und der Stoppoberfläche (74) positioniert ist, wobei die Ausdrückstange (70) dazu konfiguriert ist, den Block (90) zu kontaktieren und anzutreiben.

6. Verbinderinstallationswerkzeug nach einem der Ansprüche 1 bis 5, wobei der c-förmige Werkzeugkopf (34) wenigstens 1,83 Meter entfernt von dem ersten Ende (18) positioniert ist, während der c-förmige Werkzeugkopf (34) an das zweite Ende (22) gekoppelt ist.

7. Verbinderinstallationswerkzeug nach einem der Ansprüche 1 bis 6, wobei ein erster Vorsprung (59) sich von dem zweiten Ende (22) des länglichen Körpers (14) erstreckt, und ein zweiter Vorsprung (60) sich von dem c-förmigen Werkzeugkopf (34) erstreckt, ferner umfassend ein Befestigungsbauteil (62), das den ersten Vorsprung (59) relativ zu dem zweiten Vorsprung (60) lösbar sichert, wobei ein Lösen des Befestigungsbauteils (62) eine Bewegung des c-förmigen Werkzeugkopfs (34) relativ zu dem länglichen Körper (14) erlaubt.

8. Verbinderinstallationswerkzeug nach Anspruch 1, wobei der c-förmige Werkzeugkopf (34) für eine Schwenkbewegung um das zweite Ende (22) des Körpers (14) gelagert ist.

9. Verbinderinstallationswerkzeug nach Anspruch 8, wobei der c-förmige Werkzeugkopf (34) um wenigstens 180 schwenkbar ist.

10. Verbinderinstallationswerkzeug nach 1, wobei das zweite Ende (22) des Körpers (14) einen ersten Vorsprung (59) umfasst, und der c-förmige Werkzeugkopf (34) einen zweiten Vorsprung (60) benachbart zu dem ersten Vorsprung (59) umfasst, wobei das Verbinderinstallationswerkzeug (10) ferner ein Befestigungselement (62) umfasst, das den ersten Vorsprung (59) und den zweiten Vorsprung (60) miteinander koppelt, wobei das Befestigungselement (62) einstellbar ist zwischen einer losen Position, in der der c-förmige Werkzeugkopf (34) relativ zu dem zweiten Ende (22) des Körpers schwenken kann, und einer befestigten Position, in der der c-förmige Werkzeugkopf (34) gegen eine Bewegung relativ zu dem zweiten Ende (22) des Körpers (14) gesichert ist.

## Revendications

1. Outil (10) d'installation de connecteur comportant :
un corps (14) de forme allongée incluant une première extrémité (18), une deuxième extrémité (22), et un axe (26) s'étendant entre elles ;
une poignée (30) ayant un commutateur (50) et positionnée proximalement à la première extrémité (18), le commutateur (50) étant mobile entre une première position et une deuxième position ;
une batterie (46) supportée sur le corps (14) configurée pour fournir de la puissance à un actionneur, lorsque le commutateur (50) est dans la première position ;
**caractérisé par** le fait de comporter en outre une tête (34) d'outil en forme de c et un conduit (64) pour fournir un fluide sous pression pour entraîner la tête (34) d'outil en forme de c, la tête (34) d'outil en forme de c étant positionnée proximalement à la deuxième extrémité (22), la tête (34) d'outil en forme c ayant une surface (74) de butée et un plongeur (70), le plongeur (70) pouvant être étendu en direction de la surface de butée ; dans lequel le fluide sous pression est configuré pour s'écouler en direction de la tête (34) d'outil en forme de c lorsque le commutateur (50) est dans la première position.

2. Outil d'installation de connecteur suivant la revendication 1, dans lequel la tête d'outil en forme de c peut être pivotée en s'éloignant de l'axe de la deuxième extrémité (22) .

3. Outil d'installation de connecteur suivant la revendication 2, dans lequel la tête (34) d'outil en forme de c peut être pivotée sur un domaine d'au moins 180 degrés par rapport à la deuxième extrémité (22).

4. Outil d'installation de connecteur suivant l'une quelconque des revendications 1 à 3, dans lequel le conduit (64) s'étend le long d'une surface extérieure du corps (14) de forme allongée au moins partiellement entre la première extrémité (18) du corps (14) d'outil et la tête (34) d'outil en forme de c.

5. Outil d'installation de connecteur suivant l'une quelconque des revendications 1 à 4, dans lequel la tête (34) d'outil en forme de c est configurée pour être placée autour d'un bloc (90), de sorte que le bloc est positionné entre le plongeur (70) et la surface (74) de butée, le plongeur (70) étant configuré pour venir en contact avec le bloc (90) et entraîner le bloc (90).

6. Outil d'installation de connecteur suivant l'une quelconque des revendications 1 à 5, dans lequel la tête (34) d'outil en forme de c est positionnée à au moins 1,83 mètre à distance de la première extrémité (18) tandis que la tête (34) d'outil en forme de c est couplée à la deuxième extrémité (22).

7. Outil d'installation de connecteur suivant l'une quelconque des revendications 1 à 6, dans lequel une première projection (59) s'étend à partir de la deuxième extrémité (22) du corps (14) de forme allongée et une deuxième projection (60) s'étend à partir de la tête (34) d'outil en forme de c, comportant en outre un élément (62) de fixation fixant de manière libérable la première projection (59) par rapport à la deuxième projection (60), un relâchement de l'élément (62) de fixation permettant un mouvement de la tête (34) d'outil en forme c par rapport au corps (14) de forme allongée.

8. Outil d'installation de connecteur suivant la revendication 1, dans lequel la tête (34) d'outil en forme de c est supportée pour un mouvement de pivotement par rapport à la deuxième extrémité (22) du corps (14).

9. Outil d'installation de connecteur suivant la revendication 8, dans lequel la tête (34) d'outil en forme de c peut être pivotée sur au moins 180 degrés.

10. Outil d'installation de connecteur suivant la revendication 1, dans lequel la deuxième extrémité (22) du corps (14) inclut une première projection (59) et la tête (34) d'outil en forme de c comporte une deuxième projection (60), qui est contigüe à la première projection (59), l'outil (10) d'installation de connecteur comportant en outre un dispositif (62) de fixation couplant la première projection (59) et la deuxième projection (60), le dispositif (62) de fixation pouvant être ajusté entre une position lâche, dans laquelle la tête (34) d'outil en forme de c est autorisée à pivoter par rapport à la deuxième extrémité (22) du corps, et une position serrée, dans laquelle la tête (34) d'outil en forme c est fixée contre tout mouvement relativement à la deuxième extrémité (22) du corps (14).
